Europäisches Patentamt

European Patent Office

Office européen des brevets

(11) Numéro de publication: **0 039 281**
**B1**

## (12) FASCICULE DE BREVET EUROPEEN

(45) Date de publication du fascicule du brevet: **14.11.84**

(51) Int. Cl.³: **H 02 M 5/45,** H 02 P 7/62

(21) Numéro de dépôt: **81400637.5**

(22) Date de dépôt: **22.04.81**

(54) **Adaptateur pour circuit intermédiaire d'un ensemble de convertisseurs statiques.**

(30) Priorité: **24.04.80 FR 8009187**

(43) Date de publication de la demande:
**04.11.81 Bulletin 81/44**

(45) Mention de la délivrance du brevet:
**14.11.84 Bulletin 84/46**

(84) Etats contractants désignés:
**CH DE GB IT LI**

(56) Documents cités:
**DE-A-2 418 922**

**ELEKTRIE, vol. 31, no. 7, 1977, Dresden, DD, Berlin, DE, H. CONRAD et al.: "Thyristor-Umrichter für die Induktionserwärmung-Erfahrungen und Ergebnisse einer Erprobung bei 8 kHz", pages 354-358**

(73) Titulaire: **JEUMONT-SCHNEIDER Société anonyme dite:**
**31-32, Quai de Dion Bouton**
**F-92811 Puteaux Cedex (FR)**

(72) Inventeur: **Wiart, Albert**
**20, rue de la République**
**F-95110 Sannois (FR)**

(74) Mandataire: **Lejet, Christian et al**
**Société JEUMONT-SCHNEIDER 31-32, Quai de Dion Bouton**
**F-92811 Puteaux Cedex (FR)**

Courier Press, Leamington Spa, England.

## Description

La présente invention concerne un adaptateur disposé dans le circuit intermédiaire à courant continue d'un ensemble de transformation d'une puissance d'entrée en courant alternatif ou continu en une puissance de sortie en courant alternatif avec transformation intermédiaire en courant continu au moyen de convertisseurs statiques à thyristors des moteurs électriques étant connectes aux convertisseurs de sortie cet adaptateur, disposé dans le circuit intermédiaire, est destiné à éviter la formation d'harmoniques à fréquences variables du courant dans le réseau d'alimentation en puissance d'entrée lors de la commutation des thyristors des convertisseurs statiques.

On sait que du fait des commutations successives des thyristors, des harmoniques à fréquences variables notamment aux basses vitesses du moteur électrique utilisant la puissance de sortie en courant alternatif, viennent s'ajouter aux harmoniques à fréquence fixe engendrées par les commutations normales des thyristors du convertisseur d'entrée connecté à la ligne d'alimentation. Ces harmoniques à fréquences variables sont difficiles à éliminer par filtrage et peuvent affecter gravement le fonctionnement des circuits de voie ou de signalisation lorsque le moteur est utilisé pour la traction ferroviaire.

La présente invention a pour but de modifier la forme des ondes de courant engendrées sur la ligne d'alimentation, de manière à réduire les perturbations dans cette ligne tout en permettant une réduction notable du taux d'harmoniques à fréquence fixe.

Pour atteindre ce but, selon la présente invention, l'adaptateur, disposé dans le circuit intermédiaire à courant continu, est caractérisé en ce qu'il inclut une branche connectée entre les bornes de sortie du convertisseur d'entrée et comprenant, en série, un thyristor de roue libre et une inductance dont la valeur est égale à l'inductance totale de fuite desdits moteurs électriques.

La présente invention sera mieux comprise et d'autres buts, avantages et caractéristiques apparaîtront plus clairement à la lecture de la description qui suit de divers modes de réalisation, données, à titre non limitatif pour illustrer l'invention, description à laquelle deux planches de dessins sont annexées.

La figure 1 représente le schéma électrique d'un circuit d'alimentation en courant alternatif d'un moteur électrique à deux enroulements d'induit, conformément à la présente invention, et

La figure 2 représente une variante du schéma électrique de la figure 1 appliquée à l'alimentation en courant alternatif d'un moteur électrique à enroulement d'induit unique à neutre sorti.

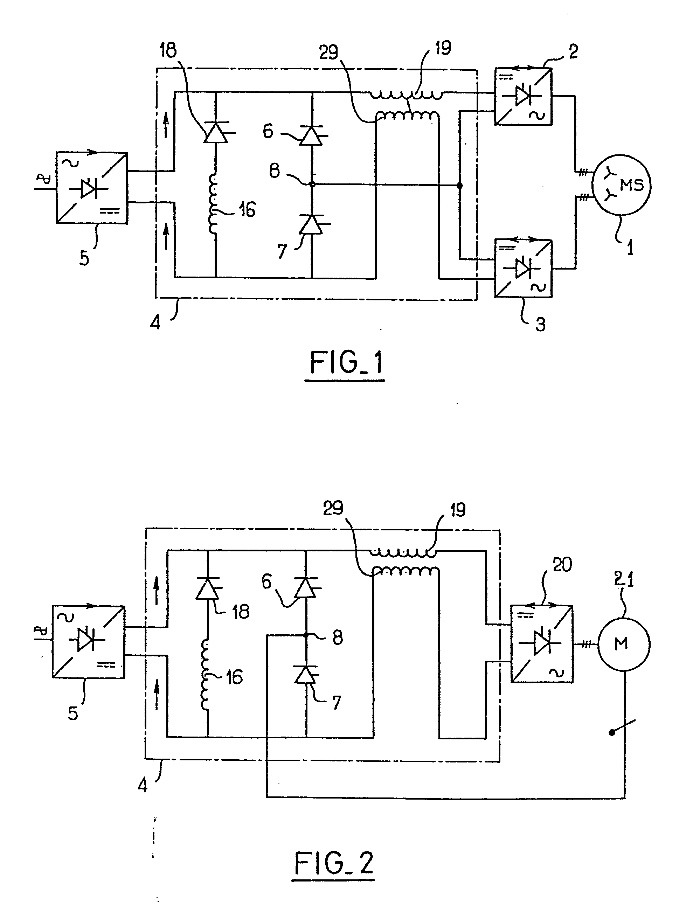

En référence maintenant à la figure 1, le moteur 1 comporte deux enroulements d'induit et est alimenté de sorti que les deux enroulements d'induit du moteur 1 sont respectivement connectés aux bornes de sortie de deux onduleurs réversibles 2 et 3, dont les bornes d'entrée sont reliées au circuit intermédiaire 4 à courant continu, connecté aux bornes d'un redresseur à thyristors 5.

Le circuit intermédiaire 4 inclut deux inductances 19, 29 à fort facteur de couplage par inductance mutuelle, dont le rôle principal est d'assurer le lissage du courant appliqué aux moteurs tout en permettant le transfert instantané du courant d'un enroulement d'induit du moteur 1 à l'autre lors des commutations des thyristors des onduleurs au démarrage ou à faible vitesse du moteur.

Une branche comprenant des thyristors 6 et 7 disposés en série, est connectée entre les bornes d'entrée du circuit intermédiaire 4, ces dernières étant reliées aux bornes de sortie du redresseur 5. Le point commun 8 des deux thyristors 6, 7 est connecté aux bornes d'une entrée de polarité inverse des onduleurs réversibles 2 et 3, bornes qui sont reliées ensemble, tandis que deux inductances 19, 29 de même valeur et à fort facteur de couplage par inductance mutuelle sont disposées respectivement entre chacune des bornes d'entrée du circuit intermédiaire 4 et les deux autres bornes de polarité inverse des deux onduleurs réversibles 2 et 3.

Connectée entre les bornes de sortie du convertisseur d'entrée 5, la branche du circuit d'adaptation conforme à l'invention est constituée par le thyristor 18 et l'inductance 16 disposés en série.

En fonctionnement, lorsque l'on veut réaliser une commutation des thyristors de l'onduleur 2, on amorce le thyristor 7 au moment où la tension instantanée est négative. Un circuit de roue libre s'établit alors par l'intermédiaire du thyristor 7, de l'onduleur 3 et de l'inductance 29. Toute la tension négative se trouve appliquée au circuit constitué par le thyristor 6, l'inductance 19 et l'onduleur 2. Du fait du fort coefficient de mutuelle inductance entre les enroulements 19 et 29, le courant disparaît dans l'enroulement 19 et dans l'onduleur 2 pour se retrouver, doublé, dans le circuit constitué par le thyristor 7 et l'onduleur 3. Toutefois, ce transfert a lieu avec un délai déterminé par la valeur de la tension et la valeur des inductances de fuite du moteur et de l'inductance mutuelle. Le courant du moteur passe par la roue libre et disparaît de ce fait de la source d'alimentation.

On commande alors la commutation des thyristors du redresseur 5; la tension instantanée sur la circuit à courant continu redevient positive et le courant réapparaît. Tant que la roue libre fonctionne, la tension positive est appliquée sur l'onduleur 2. Le courant réapparaît dans cet onduleur et, par suite, dans la ligne, avec un délai toujours déterminé par la valeur instantanée de la tension appliquée par le redresseur 5 et les inductances de fuite de moteur et de la mutuelle inductance.

Lorsqu'il n'y a pas de commutation à effectuer parmi les thyristors des onduleurs 2 et 3 lors des commutations périodiques des thyristors du redresseur 5, le changement de signe du courant dans la ligne serait beaucoup plus rapide que ci-dessus si l'on n'avait pas ajouté la branche comprenant l'inductance 16 et le thyristor 18 disposés en série, le courant dans la ligne affecterait alors la forme de créneaux rectangulaires, alors que lorsque l'on réalise une commutation, le courant de la ligne affecte une forme de trapèze.

L'alternance de trapèzes et de créneaux rectangulaires à la fréquence de commutation du courant dans le moteur engendre dans la ligne des harmoniques à fréquence variable. En connectant entre les bornes de sortie du redresseur 5 la branche conforme à l'invention, l'onde de courant dans la ligne est toujours formée de trapèzes identiques, qu'il y ait ou non commutation thyristors des onduleurs.

En effet, si au moment de la commutation périodique des thyristors du redresseur 5 il n'y a pas de commutation à opérer dans les onduleurs 2 et 3, on amorce, au moment où la tension instantanée à la sortie du redresseur 5 est négative, le thyristor 18 au lieu du thyristors 6 et 7.

La branche constituée par l'inductance 16 et le thyristor 18 va jouer un rôle de roue libre, mais son intervention sera retardée du fait de l'inductance 16. Ce retard sera déterminé par le valeur de la tension instantanée et la valeur de l'inductance. L'inductance 16 est choisie de manière que sa valeur soit égale à la somme de l'inductance de fuite du moteur et de l'inductance mutuelle 19—29. Dans ces conditions, le retard sera le même que lorsqu'il y a une commutation à réaliser dans les onduleurs 2 ou 3. La roue libre s'établit donc indentiquement et le courant disparaît dans la source d'alimentation avec le même retard.

Lorsque le courant est complètement établi dans la roue libre et donc a disparu dans la ligne, on peut amorcer les thyristors du redresseur 5. La tension redevient alors positive, le courant disparaît de la roue libre constituée par l'inductance 16 et le thyristor 18 avec un retard également déterminé par la tension instantanée et la valeur de l'inductance 15. Il réapparaît alors dans la ligne avec ce même retard.

Au total, les retards pour la disparition du courant dans la ligne et sa réapparition sont égaux, qu'il y ait ou non commutation concimitante des thyristors des onduleurs 2 ou 3.

On peut également utiliser un tel schéma pour la commande d'un moteur électrique à enroulement unique et à neutre sorti comme représenté figure 2. Dans ce cas, le point de jonction 8 des deux thyristors 6 et 7 est relié directement au neutre du moteur 21 tandis que l'enroulement d'induit est relié à un unique onduleur réversible 20, le fonctionnement du circuit étant, par ailleurs identique.

Bien que seuls certains modes de réalisation de l'invention aient été décrits, il est évident que toute modification apportée par l'Homme de l'Art dans le même esprit ne sortirait pas du cadre de la présente invention. En particulier, le convertisseur d'entrée 5 peut être constitué par un hâcheur connecté entre les bornes d'une source d'alimentation à courant continu de façon connue. En outre, il est bien évident qu'une unité centrale non représentée sur les figures commande l'amorçage des différents thyristors.

## Revendication

Adaptateur disposé dans le circuit intermédiaire à courant continu d'un ensemble de transformation d'une puissance d'entre en courant alternatif au continu en une puissance de sortie en courant alternatif avec transformation intermédiaire en courant continu au moyen de convertisseurs statiques à thyristors, des moteurs électriques étant connectés aux convertisseurs de sortie, caractérisé en ce qu'il inclut une branche comprenant en série un thyristor (18) de roue libre et une inductance (16) dont la valeur est égale à l'inductance totale de fuite des dits moteurs électriques (1), la dite branche étant connectée entre les bornes de sortie du convertisseur d'entrée (5).

## Patentanspruch

Adapter, der in den Gleichstrom-Zwischenkreis einer Einheit zur Umsetzung einer Wechselstrom- oder Gleichstrom-Eingangsleistung in eine Wechselstrom-Ausgangsleistung mittels statischen-Thyristor-Umsetzern angeordnet ist, wobei Elektromotore an die Ausgangsumsetzer angeschlossen sind, dadurch gekennzeichnet, daß er einen Zweig enthält, der in Reihenschaltung miteinander einen Freilaufthyristor (18) und eine Induktivität (16) umfaßt, deren Wert gleich der gesamten Streuinduktivität der Elektromotoren (1) ist, wobei der genannte Zweig zwischen die Ausgangsanschlüsse des Eingangsumsetzers (5) geschaltet ist.

## Claim

Adapter for insertion in the direct current intermediary circuit of an assembly for transforming direct or alternating current input power to alternating current output power with an intermediary transformation in direct current by means of thyristor static converters, electric motors being connected to the output converters, said adapter being characterized in that it includes a branch comprising in series a freewheeling thyristor (18) and an inductance (16) the value of which is equal to the total loss inductance of the said electric motors (1), said branch being connected between the output terminals of the input converter (5).

FIG_1

FIG_2